# EUROPEAN PATENT APPLICATION

(11) **EP 1 760 429 A2**
(43) Date of publication of application: **07.03.2007**
(21) Application number: 06254609.8
(22) Date of filing: 05.09.2006
(51) Int. Cl.: G01C 19/56, G01C 19/00

(54) **Angular velocity sensor**

(30) Priority: 06.09.2005 JP 2005258515
(71) Applicant: Fujitsu Media Devices Limited, Yokohama-shi, Kanagawa 222-0033 (JP); FUJITSU LIMITED, Kawasaki-shi, Kanagawa 211-8588 (JP)
(72) Inventor: Ohta, Kazuhiro c/o Fujitsu Media Devices Ltd, Yokohama-shi Kanagawa 222-0033 (JP); Hosokawa, Toshinobu c/o Fujitsu Media Devices Ltd, Yokohama-shi Kanagawa 222-0033 (JP); Tanaka, Hiroshi c/o Fujitsu Media Devices Ltd, Yokohama-shi Kanagawa 222-0033 (JP); Yachi, Masanori c/o Fujitsu Media Devices Ltd, Yokohama-shi Kanagawa 222-0033 (JP); Miyashita, Tsutomu c/o Fujitsu Media Devices Ltd, Yokohama-shi Kanagawa 222-0033 (JP); Ishikawa, Hiroshi c/o Fujitsu Limited, Kawasaki-shi Kanagawa 211-8588 (JP)
(74) Representative: Hitching, Peter Matthew

(57) **Abstract**

An angular velocity sensor includes a vibrator (10) sensing an angular velocity, and a package (30) on which the vibrator is mounted. The vibrator is arranged in the package so that a width direction of the vibrator coinciding with a long-side direction of the package. The vibrator may be attached to the package so that the vibrator is inclined with respect to a vertical direction.

## Description

### BACKGROUND OF THE INVENTION

### 1. Field of the Invention

This invention generally relates to angular velocity sensors, and more particularly, to an angular velocity sensor using a tuning fork type vibrator.

### 2. Description of the Related Art

An angular velocity sensor detects the angular velocity when an object is rotating. Angular velocity sensors are in use for avoiding blurring of images due to hand movement in taking a picture, position detection systems such as car navigation systems, and attitude control systems for automobiles and robots.

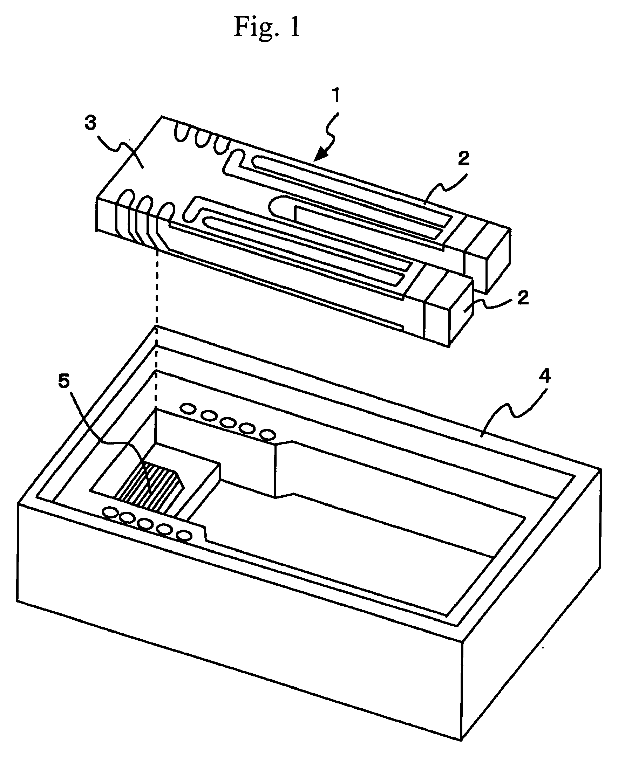

There is known an angular velocity sensor with a tuning fork type vibrator functioning as an element of the angular velocity sensor for sensing the angular velocity. The tuning fork type vibrator is preferably selected in terms of a simple structure and easy fabrication. Japanese Patent Application Publication No. 11-230758 discloses a tuning fork type vibrator, which is illustrated in Fig. 1. Referring to this figure, a tuning fork type vibrator 1 has a pair of arms 2 and a base 3 that connects ends of the arms 2 on their identical sides. The other ends of the arms 2 are free ends. A lower end of the base 3 is used as a fixing end, which is electrically and mechanically fixed to electrode pads 5 on a package 4 by an electrically conductive adhesive.

The tuning fork type vibrator may be attached to a package via a member or may be directly attached thereto. In either case, vibration of the vibrator may be transmitted to the package and may be leaked to the outside of the vibrator. Particularly, in case the package is made of a light material such as ceramics, the characteristic of the tuning fork type vibrator may not be stabilized due to leakage of vibration. This may cause an error in detection of angular velocity. The related art disclosed in the above-mentioned application publication does not consider leakage of vibration at all.

### SUMMARY OF THE INVENTION

It is an object of the present invention to provide a compact, highly precise angular velocity sensor having reduced leakage of vibration.

According to an aspect of the present invention, there is provided an angular velocity sensor including: a vibrator sensing an angular velocity; and a package on which the vibrator is mounted, the vibrator being arranged in the package so that a width direction of the vibrator coinciding with a long-side direction of the package.

### BRIEF DESCRIPTION OF THE DRAWINGS

Other objects, features and advantages of the present invention will become more apparent from the following detailed description when read in conjunction with the accompanying drawings, in which:
Fig. 1 is an exploded perspective view of a conventional angular velocity sensor;
Fig. 2 is a plan view of an angular velocity sensor according to an embodiment of the present invention;
Figs. 3A through 3D show a support frame used in the angular velocity sensor shown in Fig. 2, wherein Fig. 3A shows a development, Fig. 3B shows a plan view, Fig. 3C shows a front view, and Fig. 3D shows the support frame that supports a tuning fork type vibrator and is mounted on a package;
Fig. 4 is a graph showing results of a simulation indicative of the relation between the width of the package and the leakage of vibration of the tuning fork type vibrator;
Fig. 5 is a perspective view of the package;
Fig. 6A shows an arrangement in which the tuning fork type vibrator is inclined at an angle θ1 in the package;
Fig. 6B shows another arrangement in which the tuning fork type vibrator is inclined at another angle θ2 in the package;
Figs. 7A and 7B show electrode patterns of the tuning fork type vibrator;
Fig. 8 shows an arrangement in which the package on which the tuning fork type vibrator is mounted is covered by a lid;
Fig. 9 shows an arrangement in which the package housing the tuning fork type vibrator is mounted on a board;
Figs. 10A, 10B and 10C show other arrangements in which the package housing the tuning fork type vibrator is mounted on a board; and
Fig. 11 shows a further arrangement in which the package housing the tuning fork type vibrator is mounted on a board.

### DESCRIPTION OF THE PREFERRED EMBODIMENTS

A description will now be given, with reference to the accompanying drawings, of embodiments of the present invention.

### [First Embodiment]

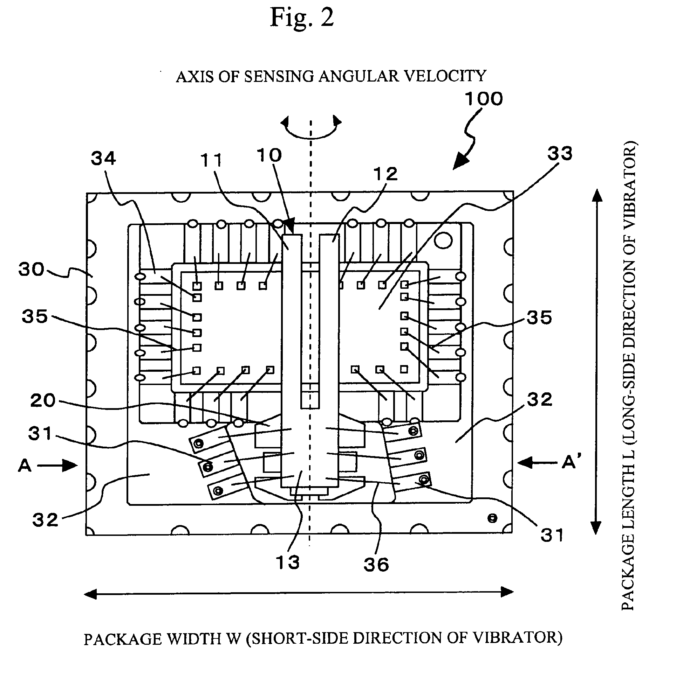

Fig. 2 shows a structure of an angular velocity sensor in accordance with a first embodiment of the present invention. An angular velocity sensor 100 has a tuning fork type vibrator 10, a support frame 20 that supports the tuning fork type vibrator 10, and a package 30 made of ceramics. The vibrator 10 has a base 13 and two arms 11 and 12, which extend from the base 13 in an identical direction and are spaced apart from each other.

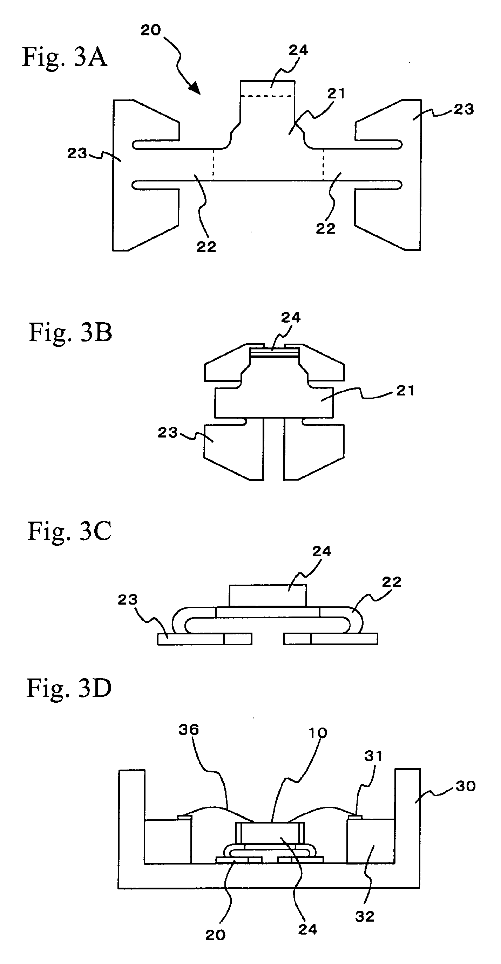

The support frame 20 supports the base of the tuning fork type vibrator 10, and fixes the tuning fork type vibrator 10 to the package 30. Fig. 3A shows a development of the support frame 20, and Fig. 3B is a plan view thereof. Fig. 3C is a front view of the support frame 20, and Fig. 3D shows the support frame 20 mounted on the package 30. As shown in Fig. 3A, the support frame 20 has a flat portion, arm portions 22 and leg portions 23. The tuning fork type vibrator 10 is mounted on the flat portion 21. The arm portions 22 support the flat portion 21 on which the tuning fork type vibrator 10 is mounted. The leg portions 23 fix the flat portion 21 and the arm portions 22 to the package 30 in a stabilized state.

The flat portion 21 and the base 13 are fixed to each other by an adhesive made of, for example, epoxy resin. This fixing can be carried out with a high productivity. The arm portions 22 are curved or bent into an arch shape, as shown in Fig. 3C. The arm portions 22 may be bent elastically to support the tuning fork type vibrator 10. The legs 23 have a large contact area that contacts the package 30, so that the package 30 can be supported in the stabilized state.

Further, the support frame 20 has an L-shaped folded portion provided in the flat portion 21 that supports the base 13 of the tuning fork type vibrator 10. The L-shaped folded portion 24 increases the support area of the support frame 20 and enhances the adhesive strength. Fig. 3D shows a cross section taken along a line A-A' shown in Fig. 2, and illustrates the support frame 20 that supports the tuning fork type vibrator 10.

The package 30 may be made of a ceramic material. In the package 30, provided are banks 32 and a mount area on which an electronic component (which may be, for example, an IC chip) 33 is mounted. Pads 31 for making electrical connections with the tuning fork type vibrator 10 are provided on the upper surfaces of the banks 32. As will be described later, the banks 32 function as vibrator positioning members.

In the present embodiment, the tuning fork type vibrator 10 is mounted on the package 30 in such a manner that the width direction of the tuning fork type vibrator 10 (short-side direction) coincides with the long-side direction of the package 30. More specifically, assuming that W and L are respectively the width and length of the package 30, the package 30 is designed so that the width W is greater than the length L in parallel with the long-side direction of the tuning fork type vibrator 10. In this manner, the width W of the package 30 is comparatively enlarged. The enlarged width W of the package 30 that supports the tuning fork type vibrator 10 brings about increased inertia and makes it difficult for vibration of the tuning fork type vibrator 10 to leak to the outside of the package.

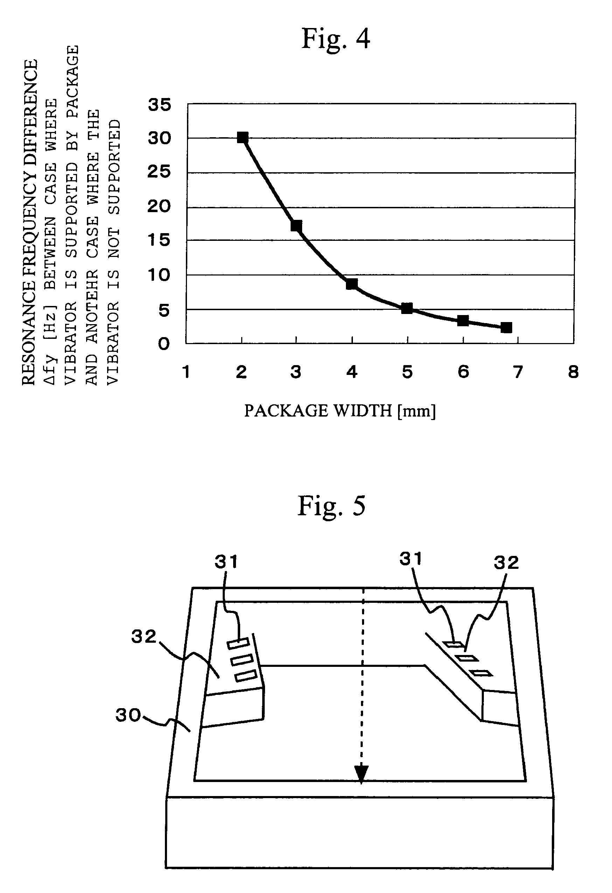

Fig. 4 shows results of a simulation indicative of the relation between the width of the package and the leakage of vibration of the tuning fork type vibrator 10. The vertical axis of the graph of Fig. 4 shows the difference (Δfy [Hz]) in the resonant frequency of the tuning fork type vibrator 10 between a first case where the tuning fork type vibrator 10 is supported by the package 30 and a second case where the tuning fork type vibrator 10 is not supported. In the simulation, the length L of the package 30 was fixed to 5 [mm], and the difference in the resonant frequency was plotted as a function of the width W of the package 30. It can be seen from Fig. 4 that the difference Δfy in the resonant frequency decreases as the width W becomes greater. Particularly, when the package width W becomes equal to or greater than the package length L (= 5 [mm]), the difference Δfy in the resonant frequency is as small as only 5 [Hz] or lower. As the difference Δfy in the resonant frequency becomes smaller, the leakage of vibration is reduced.

The tuning fork type vibrator 10 may be housed in the package 30 in the following arrangement.

The angular velocity sensor 100 may be mounted to a car navigation system attached to a dashboard of a vehicle. If the dashboard is inclined, the sensing axis of the angular velocity sensor 100 is also inclined, and error in sensing of the angular velocity is increased. Taking the above into consideration, the tuning fork type vibrator 10 is attached to the package 30 in an inclined state at a given angle. The inclined attachment of the tuning fork type vibrator 10 improves the sensing accuracy.

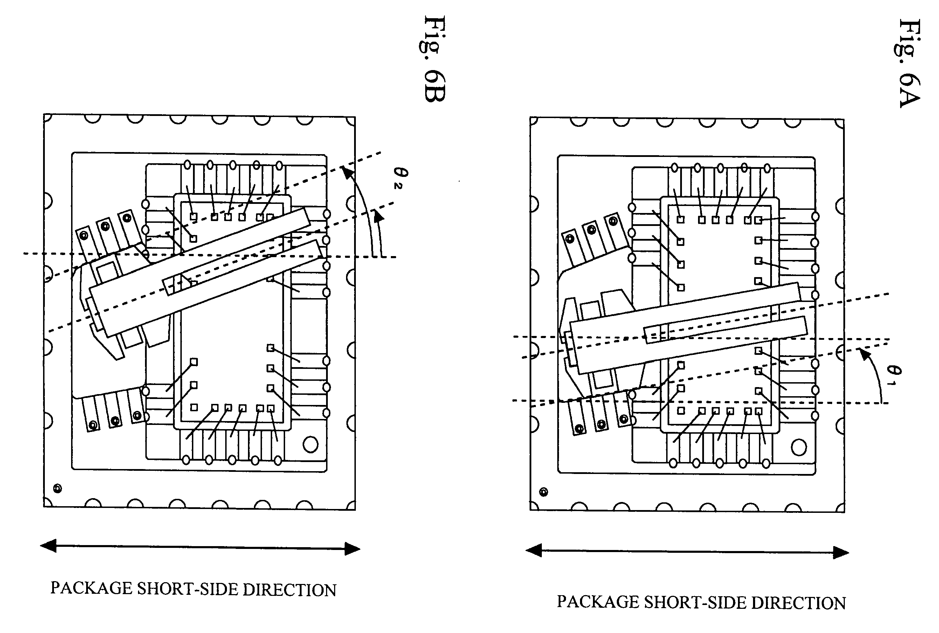

The vibrator 10 is easily and accurately positioned in the inclined state by means of the banks 32 of the package 30. As shown in Fig. 2, the banks 32 may be provided at both sides of the tuning fork type vibrator 10. Further, as shown in Fig. 5, the left and right banks 32 have surfaces that face the tuning fork type vibrator 10, these surfaces forming different angles with respect to the short-side direction of the package 30. The left and right banks 32 may be used to position the tuning fork type vibrator 10, as shown in Figs. 6A and 6B. Referring to Fig. 6A, the tuning fork type vibrator 10 is positioned so that the support frame 20 engages with the opposing surface of the right bank 32. Thus, the tuning fork type vibrator 10 can be definitely inclined at an angle θ1 with respect to the short-side direction of the package 30. Referring to Fig .6B, the tuning fork type vibrator 10 is positioned so that the support frame 20 engages with the opposing surface of the left bank 32. Thus, the tuning fork type vibrator 10 can be definitely inclined at an angle θ2 with respect to the short-side direction of the package 30. In this manner, the tuning fork type vibrator 10 can be attached to the package 30 in the inclined state of either the angle θ1 or θ2. It is to be noted that the package 30 is not inclined with respect to the attachment surface such as the dashboard but the tuning fork type vibrator 10 is inclined with respect to the package 30. Thus, the height of the angular velocity sensor 100 in the attached state is constant regardless of the attachment ways. This contributes miniaturization of the apparatus to which the angular velocity sensor 100 is attached. Further, the tuning fork type vibrator 10 may be rotated within the package 30 having the width W greater than the length L.

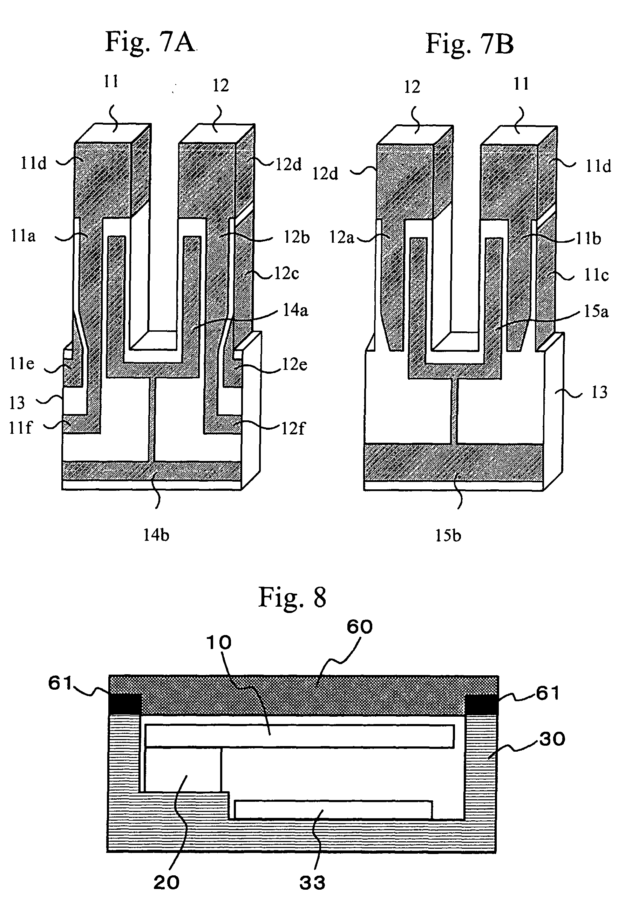

The tuning fork type vibrator 10 and the package 30 are electrically connected as follows. Referring to Figs. 7A and 7B, the tuning fork type vibrator 10 has electrodes. Fig. 7A shows the front side of the tuning fork type vibrator 10, and Fig. 7B shows the backside thereof. Detection electrodes 11a, 11b and 11c are provided on the arm 11. The detection electrodes 11a and 11b are connected via an electrode 11d. The detection electrode 11a is provided with an extraction electrode 11f. The electrode 11c is connected to an extraction electrode 11e. Similarly, detection electrodes 12a, 12b and 12c are provided on the arm 12. The detection electrodes 12a and 12b are connected via an electrode 12d. The detection electrode 12a is provided with an extraction electrode 12f. The detection electrode 12c is connected to an extraction electrode 12e. A drive electrode 14a is provided on the front surface of the tuning fork type vibrator 10, and is connected to an extraction electrode 14b. Similarly, a drive electrode 15a is provided on the back surface of the tuning fork type vibrator 10, and is connected to an extraction electrode 15b.

The electrodes shown in Figs. 7A and 7B are bonded to pads 31 provided on the package 30 via wires 36, as shown in Fig. 2. The pads 31 are provided on the banks 32, and are electrically connected to interconnections provided on or in the package 30.

The electronic component 33, which may, for example, be an IC chip, is mounted on the mount area of the package 30. Electrodes 34 for making connections with the electronic component 33 are provided on the package 30, and are connected to the electronic component 33 via wires 35. Fig. 2 shows an exemplary arrangement in which the electronic component 33 is connected to the package 30 by bonding wires. Alternatively, the electrical connections with the electronic component 33 may be made by flip-chip bonding.

A metal cap (lid member) 60 is provided on the front of the package 30, so that the tuning fork type vibrator 10 is hermetically sealed. The cap 60 has a two-step structure. The cap 60 is mounted on the package 30 in such a manner that the inner portion of the cap 60 is thicker than the circumferential end portion (outer portion) that contacts the top of the package 30 and enters into the package 30. The thick inner portion of the cap 60 increases the weight of the cap 60, so that inertia can be enlarged. A metal weight 61 made of, for example, Kovar may be provided to the circumferential end portion of the cap 60, so that the weight of the package 30 can be increased. The metal weight 61 is provided to the peripheral portion of the package 30. The increased inertia makes it more difficult for vibration to leak to the outside of the package 30.

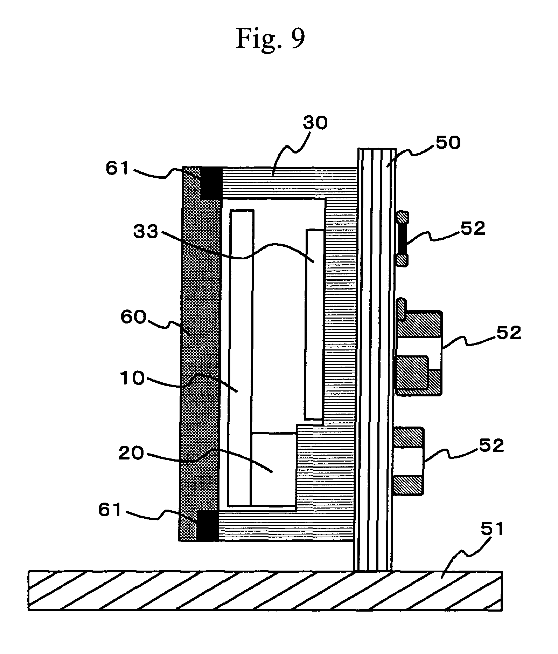

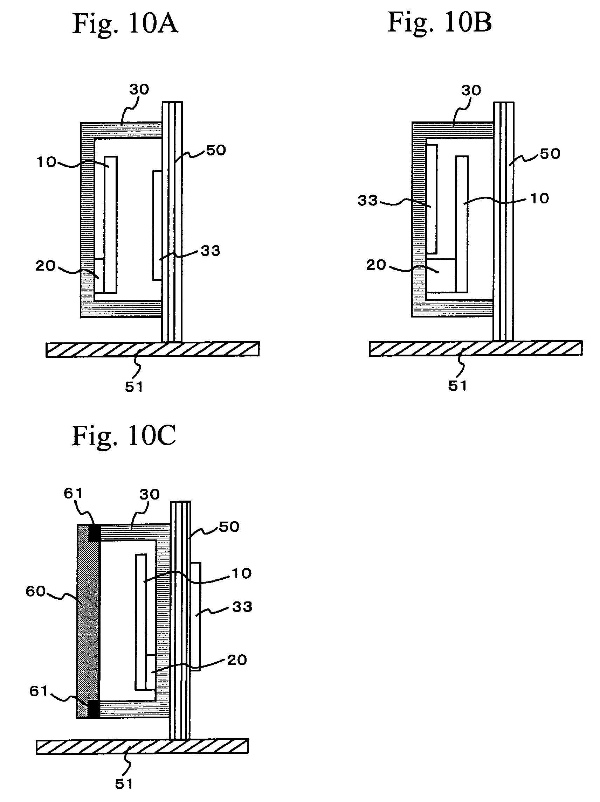

The package 30 housing the tuning fork type vibrator 10 is bonded to a printed circuit board 50, as shown in Fig. 9. The printed circuit board 50 is supported by a support board 51 in an upright arrangement. The support board 51 supports the printed circuit board in a direction vertical to the mount plane of the angular velocity sensor. Circuit parts 52 are mounted on a surface of the printed circuit board 50 opposite to the surface on which the package 30 is mounted. The package 30 may be mounted to the printed circuit board 50 in different ways from the arrangement shown in Fig. 9, as shown in Figs. 10A, 10B and 10C. Figs. 10A and 10B show arrangements in which the printed circuit board 50 serves as a lid of the package 30. That is, the printed circuit board 50 is attached to the package 30 so that the electronic component 33 is covered by the package 30. In Fig. 10A, the electronic component 33 is attached to the printed circuit board 50. In Fig. 10B, the electronic component 33 is attached to the package 30. Fig. 10C shows the cap 60 put on the package 30. The electronic component 33 is not provided in the package 30 but is attached to the surface of the printed circuit board 50 opposite to the surface on which the package 30 is provided.

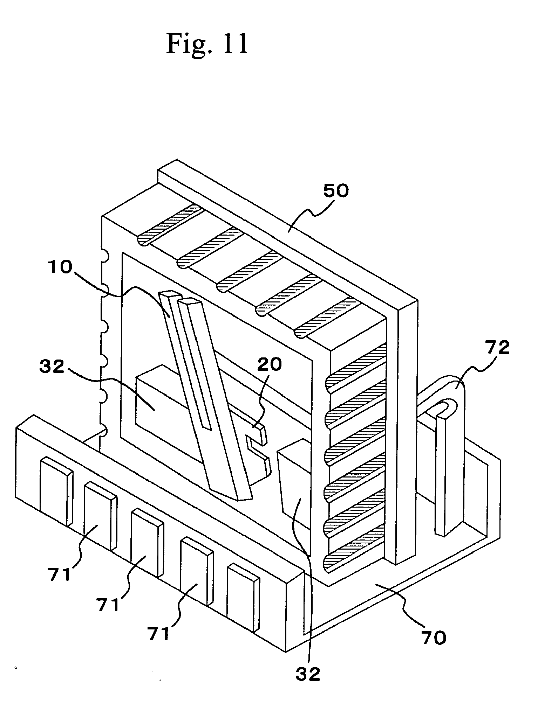

Fig. 11 is a perspective view of an arrangement in which the package 30 mounted on the printed circuit board 50 is mounted on a substrate 70 formed by molding. The printed circuit board 50 is supported on the substrate 70 by leads 72. External terminals 71 for making connections with an external device are provided on the substrate 70. Tuning fork type vibrator 10 is inclined with respect to the vertical direction.

The present invention is not limited to the specifically described embodiments, but other embodiments, variations and modifications may be made without departing from the scope of the claimed in claim. For example, the tuning fork type vibrator may have two to four arms.

The present invention is based on Japanese Patent Application No. 2005-258515 filed on September 6, 2005, and the entire disclosure of which is hereby incorporated by reference.

## Claims

1. An angular velocity sensor comprising:
a vibrator sensing an angular velocity; and
a package on which the vibrator is mounted,
the vibrator being arranged in the package so that a width direction of the vibrator coinciding with a long-side direction of the package.

2. The angular velocity sensor as claimed in claim 1, wherein the vibrator is attached to the package so that the vibrator is inclined with respect to a vertical direction.

3. The angular velocity sensor as claimed in claim 1, wherein the package has a positioning member that positions the vibrator so that the vibrator is inclined at a given angle in the package.

4. The angular velocity sensor as claimed in claim 1, wherein the package has positioning members that position the vibrator so that the vibrator is inclined at respective different angles in the package.

5. The angular velocity sensor as claimed in claim 1, further comprising a cap that hermetically seals the vibrator in the package, the cap having an inner portion thicker than an outer portion.

6. The angular velocity sensor as claimed in claim 1, further comprising a weight provided to a peripheral portion of the package.

7. The angular velocity sensor as claimed in claim 1, further comprising a printed circuit board that supports the package, and a support board that supports the printed circuit board in a direction vertical to a mount plane of the angular velocity sensor.

8. The angular velocity sensor as claimed in claim 7, further comprising an electronic component mounted on the printed circuit board, wherein the package is attached to the printed circuit board so as to cover the electronic component.

9. The angular velocity sensor as claimed in claim 7, further comprising an electronic component mounted on a first surface of the printed circuit board, wherein the package is attached to a second surface of the printed_circuit board opposite to the first surface.
